# EUROPÄISCHE PATENTSCHRIFT

(11) **EP 1 814 703 B1**
(45) Veröffentlichungstag und Bekanntmachung des Hinweises auf die Patenterteilung: **29.10.2008**
(21) Anmeldenummer: 05789524.5
(22) Anmeldetag: 29.09.2005
(51) Int. Cl.: B29B 7/02, C09J 5/06

(54) **PROZESS ZUM RECYCLING VON ELEKTRONIKBAUTEILEN**
PROCESS FOR RECYCLING ELECTRONIC COMPONENTS
PROCEDE POUR RECYCLER DES COMPOSANTS ELECTRONIQUES

(30) Priorität: 18.10.2004 DE 102004050949
(43) Veröffentlichungstag der Anmeldung: 08.08.2007
(73) Patentinhaber: tesa AG, 20253 Hamburg (DE)
(72) Erfinder: HUSEMANN, Marc, 22605 Hamburg (DE)
(86) Internationale Anmeldenummer: PCT/EP2005/054911
(87) Internationale Veröffentlichungsnummer: WO 2006/042782

(56) Entgegenhaltungen:
- WO-A-20/04056156
- WO-A-20/05028583
- DE-A1- 10 163 399
- FR-A- 2 837 114
- FR-A- 2 852 965
- PATENT ABSTRACTS OF JAPAN Bd. 2003, Nr. 12, 5. Dezember 2003 (2003-12-05) & JP 2003 286464 A (MITSUI CHEMICALS INC), 10. Oktober 2003 (2003-10-10)

## Beschreibung

Die Erfindung betrifft einen Prozess zum Recycling von elektrischen oder elektronischen Bauteilen.

Die Entsorgung oder Verwertung von Elektronikbauteilen unterliegt in der aktuellen Gesetzgebung immer strengeren Auflagen.

So werden Elektronikbauteile bei der Verschrottung des Elektronikmülls zunehmend dem Recycling zugeführt. Dieser Prozess gestaltet sich nicht immer einfach und erfordert aufwendige Verfahrensschritte, die immer mit hohen Kosten verbunden sind. Hierbei nehmen ebenfalls Haftklebebänder und insbesondere doppelseitige Haftklebebänder eine tragende Rolle ein. So finden sich z.B. in Mobiltelefonen häufig mehr als 70 unterschiedliche Haftklebebandanwendungen. Zur Verschrottung und zum Recycling der einzelnen Bauteile müssen diese Verklebungen gelöst werden. In der Regel gestaltet sich dieser Prozess als relativ schwierig, da die Haftklebebänder im Verlaufe der Anwendungszeit eine hohe Klebkraft aufbauen und daher beim Auftrennen der Verklebungsfläche häufig spalten. Weiterhin werden immer kleinere Bauteile verklebt, so dass sich diese selten zerstörungsfrei trennen lassen.

In der Patentliteratur werden verschiedene Mechanismen und Konzepte zur Zerlegung beschrieben.

In der EP 0 994 168 B1 werden Substratfilme beschrieben, die anorganische feinverteilte Zeolithe oder Silicagele enthalten. Hierdurch besitzt die Klebefolie eine extrem hohe Wasserabsorption von 5 bis 200 %. Durch die Wasserabsorption werden dann die Klebkräfte reduziert. Der Nachteil dieses Verfahrens besteht darin, dass die elektronischen Bauteile vor dem Recycling-Prozess niemals Wasser oder hoher Luftfeuchtigkeit ausgesetzt werden dürfen, was sich in der Regel nicht bewerkstelligen lässt.

In der WO 02/33018 werden Haftklebemassen beschrieben, die mit Elektronenstrahlen vernetzt werden. Über die Vernetzung wird die Klebkraft der Haftklebemasse reduziert. Diese Haftklebemassen können zudem thermisch expandierbare Mikropartikel enthalten. Das Konzept der Elektronenstrahlvernetzung erfordert aber sehr aufwendige Geräte, die eine hohe Strahlung erzeugen und somit auch die Struktur einer Vielzahl von Kunststoffen verändern. So werden z.B. Polyolefine ebenfalls durch Elektronenstrahlen vernetzt und lassen sich nachher zum Recycling nicht mehr aufschmelzen.

Des Weiteren existieren eine Vielzahl von Haftklebebändern, die wiederlösbare Eigenschaften besitzen. So gibt es z.B. Dicing Tapes, die unter UV-Strahlung die Klebkraft verlieren (US 2002/0091173 A) oder Klebemassen, die im Siebdruckverfahren aufgebracht wurden (EP 1 285 954 A1). Die Dicing Tapes besitzen den Nachteil, dass zur Entklebung UV-Licht benötigt wird. In der Regel sind die zu verklebenden Bauteile aber nicht UV-durchlässig, so dass UV-Licht nicht für den Recycling-Prozess eingesetzt werden kann. Diese wiederlösbaren ("removable") Haftklebemassen, aufgebracht im Siebdruckverfahren, besitzen dagegen den Nachteil, dass diese für die erforderliche Verklebung eine zu geringe Klebkraft aufbauen. Die spezifizierten Klebkräfte können somit nicht erzielt werden, und es besteht die Gefahr, dass unter Ausübung von Schock, insbesondere bei tiefen Temperaturen, die Klebefuge auseinander bricht.

Die Druckschrift WO 2004/056156 offenbart ein Kleber der Partikeln im nano Bereich enthält, die mittels Induktion aufgeheizt werden können um den Kleber zu lösen.

Aufgabe der Erfindung ist es, ein verbessertes Recyclingverfahren für verklebte elektrische oder elektronische Bauteile anzubieten, wobei die Klebeverbindung gelöst werden kann, ohne die Nachteile des Standes der Technik in Kauf nehmen zu müssen.

Es besteht somit weiterhin der Bedarf für ein Haftklebeband, welches sehr effizient zur Verklebung von elektronischen Bauteilen eingesetzt werden kann, eine hohe Klebkraft ausbildet und dann am Ende des Lebenszyklus des elektronischen Bauteils aktiviert und leicht entfernt werden kann. Die Klebemasse sollte bereits ohne Bestrahlung mit Elektronenstrahlen geeignete Klebeeigenschaften aufweisen.

Überraschenderweise und für den Fachmann nicht vorhersehbar wird die Aufgabe gelöst durch einen Prozess, wie er im Hauptanspruch dargelegt ist. Die Unteransprüche betreffen Weiterentwicklungen des Prozesses sowie im Prozess eingesetzte Klebeverbünde.

Demnach betrifft die Erfindung einen Prozess zum Recyceln elektrischer und/oder elektronischer Bauteile, wobei der Prozess einen Verfahrensschritt aufweist, bei welchem eine mittels einer Haftklebemasse bewirkte Verklebung zweier Komponenten des Bauteils gelöst wird, indem sich in der Haftklebemasse befindliche expandierbare Partikel durch Zufuhr von Energie ausdehnen und dabei den Verklebeverbund aufsprengen.

Sehr vorteilhaft ist die zugeführte Energie Wärmeenergie.

Vorteilhaft lassen sich solche expandierbaren Mittel einsetzen, welche mit einem Expansionsmittel versehen sind, wobei das Expansionsmittel einen Siedepunkt oder einen Sublimationspunkt von mindestens 100 °C aufweist.

Entsprechend vorteilhaft wird der Löseprozess durch Erwärmung der Haftklebemasse auf eine Temperatur von mindestens 100 °C bewirkt.

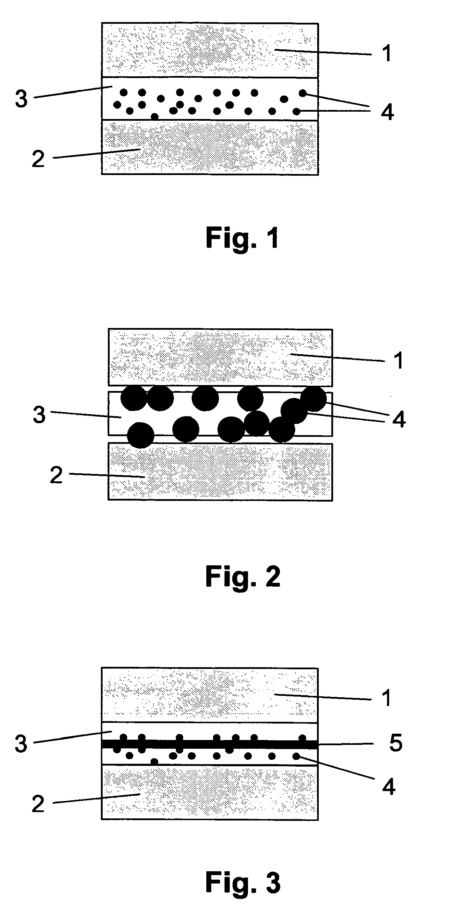

Das Verfahren zum Recyclen ist beispielhaft in den Figuren 1 und 2 dargestellt. Figur 1 zeigt einen Verbund aus zwei Elektronik-Bauteilen 1 und 2 und einer Schicht einer Haftklebemasse 3. Der Haftklebemasse sind thermisch expandierbare Mikropartikel 4 beigemischt, in bevorzugter Weise in homogener Verteilung. Vorteilhaft sind der Haftklebemasse für eine induktive Aufheizung induktiv aktivierbare Füllstoffe beigemengt (in der Figur nicht bezeichnet).

Im Beispiel sind die Elektronikbauteile mit einem Transfer-Tape verklebt, wobei die Haftklebemasse thermisch expandierbare Mikropartikel enthält.

Figur 2 zeigt den Löseprozess bei Aufheizen des Verbundes:
Durch Energie-, insbesondere Wärmezufuhr dehnen sich die Mikropartikel aus und sprengen die Verklebung auf. Die Elektronik-Bauteile 1 und 2 lassen sich nach dem Aufheizvorgang ohne Zerstörung entfernen. Die Erwärmung erfolgt bevorzugt induktiv.

Weiterhin lassen sich auch doppelseitige Haftklebebänder mit zumindest einem Träger für das erfinderische Verfahren einsetzen (s. Figur 3). Die Ziffer 5 bezeichnet ein Trägermaterial.

### Haftklebemasse

Prinzipiell lassen sich als Haftklebemassensysteme für das erfinderische doppelseitige Haftklebebandaber alle dem Fachmann bekannten Haftklebemassen verarbeiten, wie sie z.B im "Handbook of Pressure Sensitive Adhesive Technology" von Donatas Satas (van Nostrand, New York 1989) aufgeführt sind. Sehr bevorzugt werden Acrylat-, Naturkautschuk-, Synthesekautschuk-, Silikon- oder EVA-Kleber eingesetzt.

Für die erfinderische vorteilhafte Ausführung, dass ein doppelseitiges Haftklebeband mit Trägermaterial eingesetzt wird, kann die Haftklebemasse auf Seiten des Bauteil 1 mit der Haftklebemasse auf Seiten des Bauteil 2 identisch oder verschieden sein. Die Haftklebemassen entstammen aber auf jeden Fall dem Pool der oben genannten Haftklebesysteme.

Für Naturkautschukklebemassen wird der Naturkautschuk bis zu einem Molekulargewicht (Gewichtsmittel) nicht unter etwa 100.000 Dalton, bevorzugt nicht unter 500.000 Dalton gemahlen und additiviert.

Bei Kautschuk/Synthesekautschuk als Ausgangsmaterial für den Kleber sind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können Kautschuke zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.

In einer erfinderisch bevorzugten vorteilhaften Ausführung werden bevorzugt (Meth)acrylathaftklebemassen eingesetzt.

(Meth)Acrylathaftklebemassen, welche durch radikalische Polymerisation erhältlich sind, bestehen zu mindestens 50 Gew.-% auf zumindest einem acrylischen Monomer aus der Gruppe der Verbindungen der folgenden allgemeinen Formel basiert: 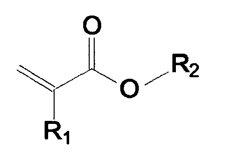 wobei R₁ = H oder CH₃ ist und der Rest R₂ = H oder CH₃ ist oder gewählt wird aus der Gruppe der verzweigten oder unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Vorteilhaften Ausführung wird die Comonomerzusammensetzung derart gewählt, dass sich die Haftklebemassen als Hitzeaktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel CH₂ = CH(R₁)(COOR₂) zusammensetzt, wobei R₁ = H oder CH₃ und R₂ eine Alkylkette mit 1 - 20 C-Atomen oder H ist.

Die Molmassen M_{w} der eingesetzten Polyacrylate betragen bevorzugt M_{w} ≥ 200.000 g/mol (Molmassenbestimmung mittels GPC).

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36^{®}). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus C₄- bis C₁₈-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Durch die Erhöhung des aromatischen Anteils steigt der Brechungsindex der Haftklebemasse an und die Streuung zwischen LCD-Glas und Haftklebemasse durch z.B. Fremdlicht wird minimiert.

Zur Weiterentwicklung können den Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallsalze, Graphit, etc., Compoundierungsmittel und/oder Alterungsschutzmittel, z.B. in Form von primären und sekundären Antioxidantien oder in Form von Lichtschutzmitteln zugesetzt sein.

Im Fall der induktiv erwärmbaren Haftklebemasse ist der Zusatz mindestens eines ferro- oder ferrimagnetischen oder superparamagnetischen oder piezoelektrischen Füllmaterials, welches unter Beaufschlagung mit einem elektrischen oder magnetischen Wechselfeld Wärme entwickelt, notwendig. Somit ist eine bevorzugte Ausführungsform des Flächengebildes mit solchen Haftklebemassen ausgerüstet, die
(a) mindestens eine Klebstoffkomponente und
(b) mindestens ein ferromagnetisches, ferrimagnetisches, superparamagnetisches oder piezoelektrisches Füllmaterial
umfassen. Bei der Anwendung elektrischer Wechselfelder sind als Füllmaterialien alle piezoelektrischen Verbindungen geeignet, z.B. Quarz, Turmalin, Bariumtitanat, Lithiumsulfat, Kaliumtartrat, Natriumtartrat, Kalium-Natrium-Tartrat, Ethylendiamintartrat, Ferroelektrika mit Perowskitstruktur und vor allem Blei-Zirkonium-Titanat. Für die Anwendung magnetischer Wechselfelder eignen sich insbesondere die Metalle Aluminium, Cobalt, Eisen, Nickel oder deren Legierungen sowie Metalloxide vom Typ n-Maghemit (γ-Fe₂O₃), n-Magnetit (Fe₃O₄), Ferrite von der allgemeinen Formel MeFe₂O₄, wobei Me für zweiwertige Metalle aus der Gruppe Mangan, Kupfer, Zink, Cobalt, Nickel, Magnesium, Calcium oder Cadmium steht. Besonders bevorzugt sind die superparamagnetischen Partikel von nanoskaliger Größe, sog. "Single-Domain-Partikel", da hierbei eine besonders effektive Erwärmungsrate erreicht werden kann (vgl. WO 02/12409 A1).

Die Ausprägung des Effektes der induktiven Erwärmbarkeit der Haftklebemasse kann durch den Füllgrad, das heißt den Massenanteil des Füllmaterials in der Haftklebemasse, bestimmt werden. Der Füllgrad sollte zwischen 1 und 30 Gew.-% betragen. In einer bevorzugten Auslegung werden zwischen 2 und 20 Gew.-% Füllmaterial eingesetzt. Die erzielbare Temperatur und die Aufheizrate ist abhängig vom Füllgrad. Durch Anhebung des Füllgrades lassen sich höhere Temperaturen erreichen. Eine Temperaturbegrenzung ähnlich des PTC-Effekts ist durch die Curietemperatur des Füllmaterials gegeben. Bei dieser Temperatur verliert das Material seine ferro-, ferri- bzw. paramagnetischen Eigenschaften, so dass weitere Erwärmung durch Induktion nicht stattfinden kann.

Sehr vorteilhaft weist das induktive Füllmaterial in mindestens einer Raumrichtung eine Ausdehnung von nicht mehr als 500 nm, bevorzugt nicht mehr als 200 nm, besonders bevorzugt von nicht mehr als 50 nm auf.

Eine weitere Verbesserung kann durch die Zugabe von mindestens einem Füllstoff mit hoher Wärmekapazität, insbesondere mit einer Wärmekapazität von mehr als 0,7 J/gK, erreicht werden. Dies führt durch die Pufferfunktion zu einer Vergleichmäßigung des Aufheizverhaltens und einer verlängerten Abgabe von Wärme nach Beendigung des aktiven Wärmeerzeugungsprozesses. Füllstoffe mit hoher Wärmekapazität sind z.B. Aluminium, Beryllium, Bor, Calcium, Eisen, Graphit, Kalium, Kupfer, Magnesium, Phosphor oder Verbindungen der vorgenannten Stoffe, insbesondere Aluminiumoxid und -chlorid, Calciumcarbonat, Calciumclorid, Kupfersulfat,Magnetit, Haematit, Magnesiumcarbonat und -clorid, Phosphorchlorid, Phosphoroxid.

In einer weiteren sehr bevorzugten Ausführung der Erfindung werden der Haftklebemasse Metallpartikel oder sehr bevorzugt Metallnadeln hinzugemischt. In einer sehr bevorzugten Ausführung wird Eisen als Metall eingesetzt. Die Metallnadeln besitzen eine Länge maximal 50 % oberhalb der Schichtdicke der Haftklebemasse. Durch die Nadeln steigt noch einmal die Kohäsion der Haftklebemasse an, so dass die Klebemasse beim Spaltungsprozess nicht so leicht gespalten wird und für den Debonding Schritt eine höhere Kohäsion besitzt.

Die induktiv aktiven Füllmaterialien können den Monomeren vor der Polymerisation und/oder nach Beendigung der Polymerisation beigemischt werden. Vorzugsweise wird das Füllmaterial nach der Polymerisation zu einer Schmelze der abzumischenden Klebstoffkomponente kompoundiert.

Weiterhin können Vernetzer und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen UVabsorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651^{®} von Fa. Ciba Geigy^{®}), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

### Expandierbare Mikrokugeln:

Als expandierbare Mikrokugeln lassen sich verschiedene Reagenzien einsetzen. Im einfachsten Fall werden anorganische Verbindungen eingesetzt, die unter Temperatureinwirkung Gase freisetzen. Beispiele hierfür sind Ammoniumhydrogencarbonat, Natriumhydrogencarbonat, Ammoniumsulfit, Natriumborhydrid oder Azide.

Weiterhin können als organische Schäumungsreagenzien, Alkane, flurierte Alkane, Fluorchlorkohlenwassertoffe eingesetzt werden. Diese Reagenzien zersetzen sich nicht sondern fangen nur in einem bestimmten Bereich an zu sieden. Weiterhin können als organische Verbindungen Azoverbindungen, wie z.B. Azobisisobutyronitril, oder Hydrazine, wie z.B. p-Toluolsulfonylhydrazid, oder Semicarbazide, wie z.B. p-Toluolsulfonylsemicarbazid, oder Triazole oder N-Nitrosoverbindungen eingesetzt werden.

In einer besonders bevorzugten Ausführung werden die Schäumungsmittel in Mikropartikel inkorperiert. Die Mikropartikel bestehen aus einer festen Schale und einem Kern, der mit dem Schäumungsmittel gefüllt ist. In einer bevorzugten Ausführung der Erfindung besteht die Schale aus Vinylchlorid/Acrylnitril Copolymeren, oder aus Polyvinylalkoholen, oder aus Polyvinylbutyralen, oder aus Polymethylmethacrylaten, oder Polyacrylnitrilen, oder aus Polyvinylchlorid, oder aus Polystyrol oder aus jedem möglichen Material, welche dehnbar oder zerbrechbar ist unter der thermischen Ausdehnung des Schäumungsmittels und welches das Schäumungsmittel im Kern vor der Temperaturaktivierung hält.

In einer bevorzugten Ausführung weise die Mikropartikel eine enge Durchmesser-Verteilungskurve auf. Der durchschnittliche Durchmesser der Mikropartikel sollte geringer als die Schichtdicke der Haftklebemasse sein. Der Anteil der Mikropartikel beträgt zwischen 2 und 75 Gew.% bezogen auf die Haftklebemasse. In einer sehr bevorzugten Ausführung der Erfindung werden zwischen 10 und 40 Gew.-% expandierbare Mikropartikel eingesetzt.

### Produktaufbau des Klebebandes:

### Trägerlose Klebebänder:

In einer vorteilhaften Ausführung der Erfindung werden Haftklebebänder ohne Permanentträger, insbesondere Transfer-Tapes, eingesetzt. In diesem Fall wird die Haftklebemasse mit den thermisch expandierbaren Partikeln auf ein Trennpapier oder eine Trennfolie beschichtet und vorteilhaft zum Haftklebeband aufgewickelt. In einigen besonderen Ausführungen kann es erforderlich sein, dass das Haftklebeband mit zwei Linern versehen wird. Haftklebebänder mit Doppelliner besitzen den Vorteil, dass sich hiermit leichter Haftklebebandstanzlinge herstellen lassen. Gegebenenfalls wird also noch ein zweiter Releaseliner zur Doppelabdeckung eingesetzt. In einer bevorzugten Ausführung beträgt die Schichtdicke der Haftklebemasse zwischen 5 und 1000 µm, mehr bevorzugt zwischen 10 und 200 µm.

### Klebebänder mit Trägern:

In einer weiteren vorteilhaften Ausführung der Erfindung werden doppelseitige Haftklebebänder mit einem Trägermaterial eingesetzt. Für diesen Fall beträgt die Schichtdicke der beiden Haftklebemassen vorteilhaft zwischen 5 und 1000 µm, mehr bevorzugt zwischen 10 und 200 µm. Die Haftklebemassen können in diesem Fall die gleiche Schichtdicke oder unterschiedliche Schichtdicken besitzen. Weiterhin wird ein Trägermaterial eingesetzt. Die filmischen Trägermaterialien besitzen bevorzugt eine Schichtdicke zwischen 4 und 250 µm, mehr bevorzugt zwischen 6 und 100 µm. Für Vlies oder Non-Woven Träger kann die Schichtdicke zwischen 10 µm und 1000 µm im Urzustand betragen. Durch den Herstellungsprozess (z.B. Heißlaminierung der Haftklebemasse), kann in einigen Fällen das Trägermaterial zusammengedrückt werden, so dass sich die Schichtdicke des Trägers von der ursprünglichen Schichtdicke unterscheidet (Verringerung).

Als Trägermaterialien für die Haftklebemasse werden die dem Fachmann geläufigen und üblichen Materialien, wie Folien (Polyester, PET, PE, PP, BOPP, PVC), Vliese, Schäume, Gewebe und Gewebefolien eingesetzt. In einer besonders bevorzugten Ausführung werden Träger eingesetzt, die eine Reißkraft von größer 20 N/15 mm besitzen (nach Iso 527-3). Weiterhin sollte der Träger eine Temperaturbeständigkeit von größer 125°C aufweisen, d.h. bei diesen Temperaturen tritt keine Deformation auf. In einer besonders bevorzugten Ausführung werden Gewebe oder Vliese eingesetzt. Diese besitzen den Vorteil, dass die Haftklebemasse in den Träger penetrieren kann und somit eine optimale Verankerung mit dem Träger aufbaut. Im Recycling Prozess kann somit beim Zerlegen der Bauteile kein Spalten des Haftklebebandes auftreten.

### Elektronische Bauteile:

Im Elektrik- und Elektronik-Segment werden eine Vielzahl von Bauteilen und Komponenten verklebt, die man am Ende des Produktlebenszyklus wieder recyceln möchte. Eine Gruppe sind z.B. LCD-Displays, wobei hier Glasscheiben, PC-Komponenten, Polarisationsfolien, etc. verklebt werden. Diese möchte man nach der Nutzung des Displays wieder sortenrein trennen. Dies lässt sich in hervorragender Weise durch das erfinderische Verfahren ermöglichen.

Ein weiteres Beispiel für Verklebungen im Elektrik- und Elektronik-Bereich sind Mobiltelefone. Hier existieren ebenfalls eine Vielzahl von Anwendungen, wie z.B. die Verklebung des Sichtfensters auf dem Gehäuse, oder die Verklebung des Mikrofons, des Lautsprechers, des Batteriepacks etc. Auch diese Komponenten bestehen aus verschiedensten Materialien mit z.T. komplett unterschiedlichen Eigenschaften. Auch hier ist eine sortenreine Trennung nach dem erfinderischen Verfahren erstrebenswert.

Ein weiteres Beispiel für die Verklebung im Elektrik- und Elektronik-Bereich sind Digitale Kameras. Auch hier werden, je nach Modell, unterschiedliche Kunststoffe und Metall miteinander verklebt. So findet man hier beispielsweise häufig Befestigungen am Aluminiumgehäuse (Nameplates, Anfasser, etc.).

Neben den exemplarischen Anwendungsfeldern exisitieren noch eine Vielzahl von anderen Produktgruppen im Elektrik und Elektronikbereich, die in Zukunft recycelt werden müssen und wo doppelseitige Haftklebebänder eingesetzt werden. Nur exemplarisch seien genannt, Fernseher (LCD + Plasma), Palmtops, Notebooks, Desktops, DVD-Player, Navigationssysteme, etc.

### Verfahren:

Die Verklebung der doppelseitigen Haftklebebänder erfolgt nach konventionellen und bekannten Prozessen unter Druck.

Wenn nun die elektronischen Bauteile dem Recycling zugeführt werden sollen, wird die Verklebung erhitzt. Dies kann erfindungsgemäß vorteilhaft geschehen, indem das gesamte Bauteil in einen Ofen gefahren und dort erhitzt wird.

Die Erhitzung erfolgt bevorzugt auf mindestens 120 °C und für einen Zeitraum von mindestens 5 Minuten.

Wahlweise kann schon vorab an den Stellen des Bauteils ein Zerlegungsprozess stattgefunden haben, an denen keine Haftklebebänder eingesetzt wurden.

Nach der Temperierung werden die Bauteile dem Ofen entnommen. Durch die thermische Expansion ist die Verklebung aufgesprengt. Nach Abkühlen auf Raumtemperatur lassen sich die einzelnen Bauteile einfach von einander trennen.

In einer weiteren Auslegung der Erfindung lassen sich mit Eisenpartikel oder Eisennadeln gefüllte Haftklebemassen durch Induktion erwärmen. In diesem Fall kann die Haftklebemasse gezielt erhitzt werden und der Spaltungsprozess wird wiederum durch die expandierbaren Mikropartikel erzielt. Bevorzugt wird die Induktion unter Verwendung eines hochfrequenten Wechselfeldes hervorgerufen, in bevorzugter Vorgehensweise in einem Induktionsofen.

### Beispiele

### Prüfmethoden

### A. Klebkraft

Die Prüfung der Schälfestigkeit (Klebkraft) erfolgte gemäß PSTC-1. Das Haftklebeband wird als 2 cm breiter Streifen auf eine Stahlplatte aufgebracht. Das Klebeband trägt eine 25 µm zulaminierte PET Verstärkungsfolie.

Es wird durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### B. Thermische Lagerung-Klebkraft

Es wird analog A vorgegangen. Das verklebte Muster wird 5 Minuten auf 120°C aufgeheizt. Anschließend wird analog A die Klebkraft ermittelt.

### Prüfmusterherstellung

### Haftklebemasse:

Ein für radikalische Polymerisationen konventioneller 2 L-Glasreaktor wurde mit 80 g Acrylsäure, 350 g 2-Ethylhexylacrylat, 40 g Isobornylacrylat und 366 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyclohexanyl)-Peroxy-dicarbonat (Perkadox 16™, Fa Akzo Nobel) gelöst in 10 g Aceton hinzugegeben. Nach 10 Stunden wurde mit 150 g Siedegrenzenbenzin 60/95 verdünnt. Die Reaktion wurde nach 24 h Reaktionszeit abgebrochen und auf Raumtemperatur abgekühlt.

Anschließend wurde das Polyacrylat mit 10 Gew.-% Mikropartikel (Durchmesser 25 µm, Varianz 1.5 %, Isobutan als Schäumungsmittel, Schale bestehend aus Acrylnitril/ Methacrylnitril/Methylmethacrylat = 67/31/2) und 0.6 Gew.-% Aluminium-(IIII)-acetylacetonat (3 %ige Lösung Aceton) abgemischt, dispergiert, auf einen Feststoffgehalt von 30 % mit Siedegrenzenbenzin 60/95 verdünnt und dann aus Lösung auf ein silikonisiertes Glassine Trennpapier der Firma Laufenberg beschichtet und bei 40°C über Nacht getrocknet.

### Beispiel 1:

Die Haftklebemasse wird wie beschrieben als Transfertape eingesetzt. Die Schichtdicke beträgt 35 µm.

### Beispiel 2:

Die Haftklebemasse wird beidseitig auf eine 12 µm PET Folie der Firma Mitsubishi laminiert. Der Masseauftrag pro Haftklebemassenseite beträgt jeweils 35 µm.

### Ergebnisse

Im Folgenden sind die klebtechnischen Eigenschaften der Beispiele1 und 2 dargestellt (Tabelle 1).

**Tabelle 1:**

| Beispiel | KK auf Stahl sofort^{a} [N/cm] Test A | KK auf Stahl nach KK auf Stahl nach Temperierung [N/cm] Test B |
|---|---|---|
| 1 | 2,8 | 0,4 |
| 2 | 4,5 | 0,6 |

| | | |
|---|---|---|
| ^{a}KK = Klebkraft auf Stahl bei 23 °C und 50 % Luftfeuchtigkeit nach der Verklebung gemessen | | |

Die in der Tabelle 1 aufgelisteten Daten verdeutlichen, daß nach dem thermischen Verfahren die Klebkräfte deutlich abnehmen.

In einem weiteren Versuch wurde auf einer Polycarbonat Handyschale ein rechteckiger Rahmenstanzling von Beispiel 2 verklebt und auf diesem dann eine entsprechene rechteckige PMMA Platte. Dieses Anwendungsbeispiel wurde dann für 5 Minuten in einem Trockenschrankofen erhitzt. Danach wurde das verklebte Bauteil aus dem Ofen entfernt und auf Raumtemperatur abgekühlt. Die Handyschale ließ sich sehr einfach von der PMMA Platte lösen.

## Patentansprüche

1. Prozess zum Recyceln elektrischer oder elektronischer Bauteile, **gekennzeichnet durch** einen Verfahrensschritt, bei welchem eine mittels einer Haftklebemasse bewirkte Verklebung zweier Komponenten des Bauteils gelöst wird, indem sich in der Haftklebemasse befindliche expandierbare Partikel **durch** Zufuhr von Energie ausdehnen und dabei den Verklebeverbund aufsprengen.

2. Prozess nach Anspruch 1, **dadurch gekennzeichnet, dass** die zugeführte Energie Wärmeenergie ist.

3. Prozess nach Anspruch 2, **dadurch gekennzeichnet, dass** der Haftklebemasse induktiv aktive Füllstoffe beigemengt sind und die Energiezufuhr durch induktive Erwärmung, insbesondere in einem Induktionsofen, bewirkt wird.

4. Prozess nach zumindest einem der vorangehenden Ansprüche, **dadurch gekennzeichnet, dass**
als expandierbare Partikel solche bestehend aus einer expandierbaren Substanz eingesetzt werden.

5. Prozess nach zumindest einem der vorangehenden Ansprüche, **dadurch gekennzeichnet, dass**
als expandierbare Partikel solche bestehend aus einer festen Schale und einem Kern eingesetzt werden, wobei der Kern mit einer expandierbaren Substanz gefüllt ist.

6. Prozess nach zumindest einem der Ansprüche 4 oder 5, **dadurch gekennzeichnet, dass**
als expandierbare Substanz solche anorganischen Verbindungen eingesetzt werden, die unter Wärmezufuhr Gase freisetzen, insbesondere Ammoniumhydrogencarbonat, Natriumhydrogencarbonat, Ammoniumsulfit, Natriumborhydrid und/oder Aziden.

7. Prozess nach zumindest einem der vorangehenden Ansprüche, **dadurch gekennzeichnet, dass**
als expandierbare Substanz organische Schäumungsreagenzien, Alkane, fluorierte Alkane und/oder Fluorkohlenwasserstoffe eingesetzt werden.

8. Prozess nach zumindest einem der vorangehenden Ansprüche, **dadurch gekennzeichnet, dass**
als expandierbare Substanz Azoverbindungen, Hydrazine, Semicarbazide und/oder Triazole eingesetzt werden.

9. Elektrisches oder elektronisches Bauteil, aufweisend zumindest einen Verbund zweier Komponenten, welche durch ein Haftklebeband ausgerüstet mit zumindest einer Schicht einer Haftklebemasse miteinander verbunden sind, **dadurch**
**gekennzeichnet, dass**
die Haftklebemasse expandierbare Partikel aufweist, welche sich bei Zufuhr von Energie ausdehnen.

10. Bauteil nach Anspruch 9, aufweisend induktiv aktive Partikel.

## Claims

1. Process for recycling electrical or electronic components, **characterized by** a step in which an adhesive bond between two constituents of the component, brought about by means of a pressure-sensitive adhesive, is parted, by expandable particles located within the pressure-sensitive adhesive expanding through supply of energy and, in so doing, forcing open the adhesive bond.

2. Process according to Claim 1, **characterized in that** the energy supplied is thermal energy.

3. Process according to Claim 2, **characterized in that** inductively active fillers are admixed to the pressure-sensitive adhesive and the supply of energy is brought about by inductive heating, more particularly in an induction oven.

4. Process according to at least one of the preceding claims, **characterized in that** expandable particles used comprise those composed of an expandable substance.

5. Process according to at least one of the preceding claims, **characterized in that** expandable particles used comprise those composed of a solid shell and a core, the core being filled with an expandable substance.

6. Process according to at least one of Claims 4 or 5, **characterized in that** use is made as expandable substance of those inorganic compounds which, with supply of heat, release gases, more particularly ammonium hydrogen carbonate, sodium hydrogen carbonate, ammonium sulphite, sodium borohydride and/or azides.

7. Process according to at least one of the preceding claims, **characterized in that** use is made as expandable substance of organic foaming reagents, alkanes, fluorinated alkanes and/or hydrofluorocarbons.

8. Process according to at least one of the preceding claims, **characterized in that** use is made as expandable substance of azo compounds, hydrazines, semicarbazides and/or triazoles.

9. Electrical or electronic component comprising at least one bond between two constituents which have been bonded to one another by means of a pressure-sensitive adhesive tape equipped with at least one layer of a pressure-sensitive adhesive, **characterized in that** the pressure-sensitive adhesive comprises expandable particles which expand on supply of energy.

10. Component according to Claim 9, comprising inductively active particles.

## Revendications

1. Procédé pour le recyclage de pièces électriques ou électroniques, **caractérisé par** une étape de procédé dans laquelle un collage réalisé par une masse autoadhésive de deux composants de la pièce est défait en ce que les particules expansibles se trouvant dans la masse autoadhésive se dilatent par alimentation d'énergie et font ainsi exploser l'assemblage collé.

2. Procédé selon la revendication 1, **caractérisé en ce que** l'énergie alimentée est de l'énergie thermique.

3. Procédé selon la revendication 2, **caractérisé en ce que** des charges actives en induction sont mélangées à la masse autoadhésive et que l'alimentation d'énergie est réalisée par chauffage par induction, en particulier dans un four à induction.

4. Procédé selon au moins l'une quelconque des revendications précédentes, **caractérisé en ce qu'**on utilise comme particules expansibles celles constituées par une substance expansible.

5. Procédé selon au moins l'une quelconque des revendications précédentes, **caractérisé en ce qu'**on utilise comme particules expansibles celles constituées par une coquille solide et un noyau, le noyau étant rempli par une substance expansible.

6. Procédé selon au moins l'une quelconque des revendications 4 ou 5, **caractérisé en ce qu'**on utilise comme substance expansible des composés inorganiques qui libèrent des gaz sous l'effet d'une alimentation d'énergie, en particulier l'hydrogénocarbonate d'ammonium, l'hydrogénocarbonate de sodium, le sulfite d'ammonium, le borohydrure de sodium et/ou les azides.

7. Procédé selon au moins l'une quelconque des revendications précédentes, **caractérisé en ce qu'**on utilise comme substance expansible des réactifs moussants organiques, des alcanes, des alcanes fluorés et/ou des hydrocarbures fluorés.

8. Procédé selon au moins l'une quelconque des revendications précédentes, **caractérisé en ce qu'**on utilise comme substance expansible des composés de type azo, des hydrazines, des semi-carbazides et/ou des triazoles.

9. Pièce électrique ou électronique, présentant au moins un assemblage de deux composants, qui sont assemblés l'un à l'autre par une bande autoadhésive apprêtée avec au moins une couche d'une masse autoadhésive, **caractérisée en ce que** la masse autoadhésive présente des particules expansibles qui se dilatent sous l'effet d'une alimentation d'énergie.

10. Pièce selon la revendication 9, présentant des particules actives par induction.
